(19)

Europäisches
Patentamt

European
Patent Office

Office européen
des brevets

(11) **EP 4 730 607 A1**

(12) **EUROPEAN PATENT APPLICATION**

(43) Date of publication:
22.04.2026 Bulletin 2026/17

(21) Application number: 25208225.0

(22) Date of filing: **13.10.2025**

(51) International Patent Classification (IPC):
**H02J 9/06** (2006.01)

(52) Cooperative Patent Classification (CPC):
**H02J 9/062; H02J 9/06**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.10.2024 CN 202411463930**

(71) Applicant: **Lian Zheng Electronic (Shenzhen) Co.,
Ltd.
Guangdong 518101 (CN)**

(72) Inventors:
• **ZICHENG, FENG
Guangdong, 518101 (CN)**
• **YIPING, WU
GUANGDONG, 518101 (CN)**
• **HU, QIN
GUANGDONG, 518101 (CN)**

(74) Representative: **Schwan Schorer & Partner mbB
Patentanwälte
Bauerstraße 22
80796 München (DE)**

(54) **CONTROL METHOD AND CONTROLLER OF AN UNINTERRUPTIBLE POWER SUPPLY**

(57)    A control method and a controller to control switching of a UPS from mains mode to battery mode are provided. The control method includes voltage-loop control and current-loop control. The voltage-loop control provides a current control signal based on a comparison between a bus-voltage sampling value and a bus-voltage reference value. The current-loop control provides a PWM signal for operation in battery mode based on a comparison between a battery-current sampling value and a current reference value. The method includes: determining the current reference value in a first control cycle of the current-loop control based on the current control signal and a battery-current calculated value in direct proportion to an inverter output power of the UPS; and determining the current reference value in subsequent control cycles based only on the current control signal directly related to a current reference value of a previous control cycle.

Step S1: In a first control cycle of a current loop controller, a current reference value is equal to a current control signal output from a voltage loop controller plus a battery current calculated value.

Step S2: In a second control cycle of the current loop controller, the current reference value is equal to the current control signal output from the voltage loop controller, and the current control signal is directly related to the current reference value of the first control cycle.

Step S3: In a $k^{th}$ control cycle ($k \geq 3$) of the current loop controller, the current reference value is equal to the current control signal output from the voltage loop controller, and the current control signal is directly related to a current reference value of a $(k-1)^{th}$ control cycle.

FIG. 3

EP 4 730 607 A1

**Description**

TECHNICAL FIELD

The present invention belongs to the field of power supplies, and in particular, to a control method and a controller for an uninterruptible power supply.

BACKGROUND

The statements in this part are merely intended to provide background information related to the present invention, to help understand the present invention. This background information does not necessarily constitute the prior art.

An uninterruptible power supply (UPS) is a power protection device that is configured to instantaneously switch to providing continuous power to a load from a backup power supply (e.g., a rechargeable battery) when a primary power supply (e.g., a power grid) is not in a normal state, so as to protect the load from damage due to power interruption of the primary power supply.

The UPS may operate in either a mains mode or a battery mode. Different controllers may be used for the battery mode and mains mode. In the mains mode, the controller for the battery mode does not operate; and in the battery mode, the controller for the mains mode does not operate. When the UPS is switched from the mains mode to the battery mode, the controller for the battery mode starts operating. In a mode switching process, the controller for the mains mode and the controller for the battery mode do not operate due to a switch switching time delay (usually several microseconds to several milliseconds). In this case, the load absorbs energy from a direct current bus. In addition, after the controller for the battery mode starts operating, it also takes a period of time to adjust from an initial state to a steady state. In this period of time, input energy is less than energy consumed at an output terminal of the UPS, and therefore, the load also absorbs energy from the direct current bus. The load absorbing energy from the direct current bus causes a bus voltage of the UPS to be reduced, and an output voltage (that is, a voltage obtained after filtering an inverter voltage) waveform of the UPS is distorted.

SUMMARY

In view of this, an objective of the present invention is to overcome the foregoing defect in the prior art, and provide a control method for an uninterruptible power supply, used to control switching of the uninterruptible power supply from a mains mode to a battery mode. The control method includes voltage loop control and current loop control, where the voltage loop control provides a current control signal based on a comparison between a bus voltage sampling value and a bus voltage reference value of the uninterruptible power supply, the current loop control provides, based on a comparison between a battery current sampling value and a current reference value, a PWM control signal for operation in the battery mode, and the control method includes the following steps:

determining, in a first control cycle of the current loop control, the current reference value based on the current control signal and a battery current calculated value, where the battery current calculated value is in direct proportion to an inverter output power of the uninterruptible power supply; and

determining, in subsequent control cycles of the current loop control, the current reference value based only on the current control signal, where a current control signal of each control cycle of the subsequent control cycles is directly related to a current reference value of a previous control cycle.

According to the control method of the present invention, preferably, the battery current calculated value is equal to the inverter output power divided by a battery voltage.

According to the control method of the present invention, preferably, in the first control cycle, the current reference value is equal to a sum of the current control signal and the battery current calculated value.

According to the control method of the present invention, preferably, in the subsequent control cycles, the current reference value is equal to the current control signal.

According to the control method of the present invention, preferably, an amplitude limiting processing step is included, where

in the first control cycle, amplitude limiting processing is performed after summing the current control signal and the battery current calculated value, and then the current reference value is determined based on an amplitude limiting processed signal; and

in the subsequent control cycles, amplitude limiting processing is performed on the current control signal, and then the current reference value is determined based on an amplitude limiting processed signal.

According to the control method of the present invention, preferably, the voltage loop control includes proportional-integral adjustment, and an output of the voltage loop control is an output of the proportional-integral adjustment.

According to the control method of the present invention, preferably, the following formula is followed:

$$y_k = y_{k-1} + K_p(e_k - e_{k-1}) + K_i T_s e_k$$

In the formula, $k$ is a sequence number of a control cycle, and $k \geq 1$; $y_k$ represents a current reference value of current loop control of a $k^{th}$ control cycle, $y_{k-1}$ represents a current reference value of current loop control of a $(k-1)^{th}$ control cycle, $K_p$ represents a proportional coefficient of the proportional-integral adjustment, $K_i$ represents an integral coefficient of the proportional-integral adjustment, $T_s$ represents a time of a control cycle, $e_k$ represents an input of the proportional-integral adjustment of the $k^{th}$ control cycle, and $e_{n-1}$ represents an input of the proportional-integral adjustment of the $(k-1)^{th}$ control cycle.

According to the control method of the present invention, preferably, in the first control cycle, $y_1$ is equal to a value obtained after a sum of the current control signal and the battery current calculated value is amplitude limiting processed.

According to the control method of the present invention, preferably, in a second control cycle, $y_2$ is equal to a value obtained after the current control signal is amplitude limiting processed.

According to another aspect, the present invention further provides a controller for an uninterruptible power supply, configured to control switching of the uninterruptible power supply from a mains mode to a battery mode, where the controller includes a voltage loop controller and a current loop controller, where the controller is configured to perform the control method for an uninterruptible power supply according to the present invention.

Compared with the prior art, the control method for an uninterruptible power supply in the present invention reduces distortion of an inverter voltage waveform, and a BUS voltage drops less during mode transition.

BRIEF DESCRIPTION OF THE DRAWINGS

The following further describes embodiments of the present invention with reference to the accompanying drawings, where:

FIG. 1 is a structural block diagram of a UPS according to an embodiment of the present invention;

FIG. 2 is a structural block diagram of a battery mode controller according to an embodiment of the present invention;

FIG. 3 is a battery mode control flowchart according to an embodiment of the present invention;

FIG. 4A and FIG. 4B are respectively an oscilloscope sampled diagram of a control method in the prior art and an oscilloscope sampled diagram of a control method according to an embodiment of the present invention; and

FIG. 5 is a comparison between BUS voltages when a control method in the prior art is used and when the control method of the present invention is used.

DETAILED DESCRIPTION

To make the objectives, technical solutions, and advantages of the present invention clearer, the following further describes the present invention in detail through specific embodiments with reference to the accompanying drawings. It should be understood that the specific embodiments described herein are merely intended to explain the present invention, and are not intended to limit the present invention.

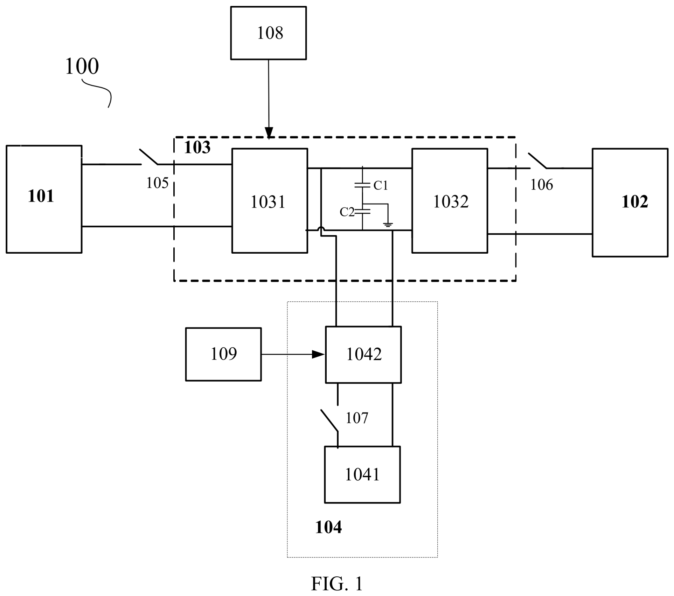

An embodiment of the present invention provides an exemplary UPS. Referring to a structural block diagram of the UPS in this embodiment shown in FIG. 1, the UPS 100 includes an input terminal 101, an output terminal 102, a power conversion branch 103, a battery branch 104, a primary input switch 105, a primary output switch 106, a mains mode controller 108, and a battery mode controller 109, where the power conversion branch 103 includes a rectifier module (AC-DC converter) 1031 and an inverter module (DC-AC converter) 1032 that are sequentially connected between the input terminal 101 and the output terminal 102; and the battery branch 104 includes a rechargeable battery 1041, a battery conversion module (a battery discharging module, for example, a DC-DC converter) 1042, and a switch 107 connected between the rechargeable battery 1041 and the battery conversion module 1042. In addition, bus capacitors (also referred to as BUS capacitors) C1 and C2 are also connected between direct current buses. Those skilled in the art can understand that the UPS 100 may further include a bypass branch, a battery charging module, a battery charging controller, and the like (not shown in the figure). In addition, a battery charging function may also be implemented by using the battery conversion module 1042, for example, a bidirectional DC-DC converter is used. In an embodiment, the mains mode controller 108 and the battery mode controller 109 are integrated into a control chip, and are implemented as different control units in the control chip.

When the mains power supply is normal, the primary input switch 105 and the primary output switch 106 are switched on, and the mains mode controller 108 operates. The mains mode controller controls the rectifier module 1031 to perform AC-DC conversion on the mains power input to the input terminal 101, then provide a DC power to the direct current buses; subsequently, the inverter module 1032 performs DC-AC conversion on the DC power, and then provides a converted AC power to a load through the output terminal 102.

When a mains power supply is faulty, the primary input switch 105 is switched off, the switch 107 and the primary output switch 106 are switched on, and the battery mode controller 109 operates. The battery mode controller controls the battery conversion module 1042 to perform DC-DC conversion on a DC power provided by the rechargeable battery 1041, then provides a converted DC power to the direct current buses; subsequently, the inverter module 1032 performs DC-AC conversion on the converted DC power, and then provides a converted AC power to the load through the output terminal 102.

Common AC-DC converters or DC-DC converters use controllable switches (such as transistors) to control the flow of current. Such converters implement voltage conversion by controlling on and off of the controllable switches, so that higher efficiency and better output voltage stability can be provided. Common switching converters include non-isolated converters such as Buck, Boost, and Buck-Boost converters, as well as isolated converters such as forward, reverse, half-bridge, and full-bridge converters, and the like. In this embodiment of the present invention, the mains mode controller 108 and the battery mode controller 109 control on and off of transistors in the rectifier module 1031 and the battery conversion module 1042 respectively to implement AC-DC conversion and DC-DC conversion. In particular, the mains mode controller 108 and the battery mode controller 109 provide pulse width modulation PWM control signals to transistors in the rectifier module 1031 and the battery conversion module 1042 respectively. For rectifier modules and battery conversion modules of different circuit topologies, on-off logic of transistors varies, and specific on-off logic is not described herein again.

Generally, a switch has a switching time delay, also referred to as a switching time, which refers to a period of time required for switching from an "on" state to an "off" state or from an "off" state to an "on" state. Generally, the switching time refers to a period of time from a time point at which the switch receives a channel switching command to a time point at which a signal power on a switched-to channel reaches 90% of a full amplitude. When the UPS is switched from the mains mode to the battery mode, the primary input switch 105 switches from an on state to an off state, and the switch 107 switches from an off state to an on state. Because of the switching time delay of the switch, there is a case in which both the mains power supply and the battery stop supplying power to the BUS capacitors C1 and C2 in a switching process. In this case, the inverter module 1032 absorbs energy stored in the capacitors C1 and C2, which results in voltages of the capacitors C1 and C2 decreasing, thereby causing distortion of an inverter output voltage waveform.

An embodiment of the present invention provides a UPS battery mode control method based on inverter output power feedback. A power output from an inverter module (also referred to as "inverter output power" in the present invention) is monitored in real time, and then a battery current is calculated based on the inverter output power. In a first control cycle of a battery mode controller, a current reference value is determined based on a calculated battery current and a measured direct current bus voltage value, that is, battery mode control is based on both a direct current bus voltage and the inverter output power. In this embodiment of the present invention, a control cycle of a battery mode is a cycle of a control program, and is generally a PWM cycle or a multiple of a PWM cycle.

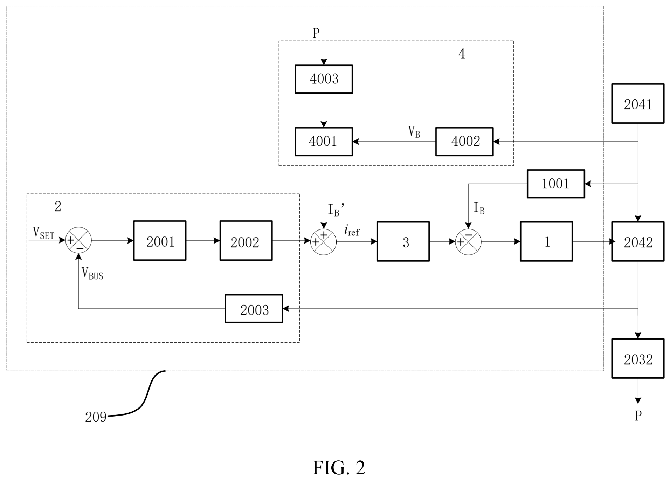

Referring to a structural block diagram of a battery mode controller shown in FIG. 2, when a UPS is switched from a mains mode to a battery mode, the battery mode controller 209 controls a battery conversion module 2042 to perform DC-DC conversion on an output voltage of a rechargeable battery 2041, then provides a converted DC voltage to a direct current bus, and then an inverter module 2032 performs DC-AC conversion on the converted DC voltage to provide an inverter output power P.

The battery mode controller 209 includes a current loop controller 1 and a voltage loop controller 2, and an output of the voltage loop controller 2 is provided to the current loop controller 1. Preferably, the output of the voltage loop controller 2 is provided to the current loop controller 1 after being amplitude limiting processed by an amplitude limiting unit 3.

In this embodiment of the present invention, the battery mode controller 209 further includes an inverter output power feedback module 4. The inverter output power feedback module 4 provides a current signal that reflects the inverter output power P. In a first control cycle of the battery mode controller, this current signal and a current signal output from the voltage loop controller 2 are added together, for example, by using an adder and then the sum is directly provided to the current loop controller 1 as a current reference value, or the sum is provided to the current loop controller 1 as a current reference value after being amplitude limiting processed by the amplitude limiting unit 3.

The current loop controller 1 receives the current reference value and a battery current (also referred to as a battery current sampling value or a battery current actual value) $I_B$ that is collected by a battery current sampling unit 1001, outputs a corresponding PWM signal based on a comparison between the current reference value and the battery current $I_B$ to control the battery conversion module 2042, and specifically provides a PWM signal for a switching transistor in the battery conversion module 2042. For example, a difference between the current reference value and the battery current sampling value is obtained by using a subtractor and then is provided to the current loop controller 1, and the current loop controller 1 outputs a PWM signal to control the battery conversion module 2042. For example, when the battery current sampling value is less than the current reference value, a duty cycle of the PWM signal is increased to increase the battery current, so as to improve an output of the battery conversion module 2042, and then increase the inverter output power P.

The voltage loop controller 2 includes a low-pass filter 2001, a PI regulator 2002, and a direct current bus voltage sampling module 2003. In another embodiment, the direct current bus voltage sampling module 2003 is a separate module independent of the voltage loop controller 2.

The direct current bus voltage sampling module 2003 collects a direct current bus voltage (also referred to as a bus voltage sampling value) $V_{BUS}$. The direct current bus voltage may be a positive direct current bus voltage or a negative direct current bus voltage. A difference between the bus voltage sampling value $V_{BUS}$ and a bus voltage reference value $V_{SET}$ (the difference is obtained, for example, by using a subtractor) is filtered by the low-pass filter 2001 and then is provided to the PI regulator 2002 to output a current control signal $I_C$. Those skilled in the art know that a PI regulator (that is, a proportional-integral regulator) is a common linear controller. The PI regulator processes a proportion and an integral of an error signal to generate a control signal, so as to implement precise control on a controlled object. The proportion (P) part directly generates a control output based on current deviation, and the integral (I) part focuses on accumulation of errors, to eliminate steady state errors. In this embodiment of the present invention, the PI regulator 2002 processes the difference between the bus voltage sampling value $V_{BUS}$ and the bus voltage reference value $V_{SET}$, to generate the current control signal. Those skilled in the art can understand that, in this embodiment, the output of the PI regulator 2002 is the output of the voltage loop controller 2. The low-pass filter 2001 is not necessary, and in a case of relatively small signal noise, the low-pass filter may be omitted.

The inverter output power feedback module 4 includes a battery current calculation module 4001, a battery voltage sampling module 4002, and an inverter output power sampling module 4003. The battery voltage sampling module 4002 collects a battery voltage $V_B$ of the rechargeable battery 2041 and provides the battery voltage $V_B$ to the battery current calculation module 4001. The inverter output power sampling module 4003 collects the inverter output power P and provides the inverter output power P to the battery current calculation module 4001. In this embodiment of the present invention, the inverter output power sampling module 4003 monitors and collects the inverter output power P of the inverter module 2032 in real time. The inverter output power may be an active power in half a cycle (a mains power cycle), an active power in one cycle, or an instantaneous active power. Preferably, the inverter output power is an active power in half a cycle or one cycle. In such an embodiment, the inverter output power sampling module 4003 is independent of the battery mode controller 209, and starts to monitor and sample the inverter output power before the battery mode controller 209 starts operating. The battery current calculation module 4001 calculates the battery current based on the inverter output power P and the battery voltage $V_B$ to obtain a battery current calculated value $I_B'$. The battery current calculated value is an expected battery current that meets the inverter output power P, and thus may also be referred to as a battery current expected value. Regardless of power loss, the inverter output power P should be equal to the product of the battery voltage $V_B$ and the battery current. Therefore, the battery current calculated value $I_B'$ is equal to the inverter output power P divided by the battery voltage $V_B$. The battery current calculated value $I_B'$ is in direct proportion to the inverter output power P, thus reflecting the inverter output power P. In another embodiment, the battery current calculated value $I_B'$ is equal to the inverter output power P divided by the battery voltage $V_B$ and multiplied by a coefficient, where the coefficient is selected based on an actual situation.

When the UPS switches from the mains mode to the battery mode, the battery mode controller switches from a non-operating state to an operating state. A battery mode control method includes voltage loop control and current loop control, where the voltage loop control provides a current control signal based on a comparison between a direct current bus voltage sampling value and a bus voltage reference value of the UPS, the current loop control provides, based on a comparison between a battery current sampling value and a current reference value, a PWM control signal for operation in the battery mode, and the control method includes the following steps:

(1) determining, in a first control cycle of the current loop control, the current reference value based on the current control signal and a battery current calculated value, where the battery current calculated value is in direct proportion to an inverter output power of the uninterruptible power supply; and

(2) determining, in subsequent control cycles of the current loop control, the current reference value based only on the current control signal, where a current control signal of each control cycle of the subsequent control cycles is directly related to a current reference value of a previous control cycle.

In this embodiment of the present invention, a signal that is obtained after a current control signal $I_C$ in a $k^{th}$ ($k$ is a sequence number of a control cycle, and $k \geq 1$) control cycle is processed through amplitude limiting stage is represented by $y_k$. For clarity, the following uses a preferred embodiment in which an amplitude limiting unit 3 exists as an example to discuss the battery mode control method of the UPS.

In an embodiment, the voltage loop control is performed according to the following formula (1):

$$y_k = y_{k-1} + K_p(e_k - e_{k-1}) + K_i T_s e_k \qquad \text{Formula (1)}$$

In the formula, $y_k$ represents a current reference value input into a current loop controller in an ongoing control cycle, $y_{k-1}$ represents a current reference value input into the current loop controller in a previous control cycle, $K_p$ represents a proportional coefficient of a PI regulator, $K_i$ represents an integral coefficient of the PI regulator, $T_s$ represents a period of time of a control cycle, $e_k$ represents an input of the PI regulator in the ongoing control cycle, and $e_{n-1}$ represents an input of the PI regulator in the previous control cycle.

For the first control cycle, the previous control cycle of the current loop controller is not yet running, so the corresponding $y_{k-1}$ (i.e., $y_0$) = 0. However, in this first control cycle, the inverter output power feedback module 4 participates in feedback control. Therefore, the current reference value of the current loop control is actually equal to an output current control signal of the PI regulator plus a battery current calculated value output from the battery current calculation module 4001.

For a control cycle after the first control cycle, the inverter output power feedback module 4 no longer participates in feedback control. Therefore, the current reference value of the current loop control is actually equal to the output current control signal of the PI regulator. However, a difference lies in that for a second control cycle, $y_{k-1}$ in the foregoing formula (1) is $y_1$, that is, the current reference value of the current loop controller in the first control cycle, which is equal to the output current control signal of the PI regulator plus the battery current calculated value output from the battery current calculation module 4001. However, for a third control cycle and subsequent control cycles, $y_{k-1}$ is $y_2$, $y_3$, ..., which is only the output current control signal of the PI regulator, without participation of the calculated battery current value.

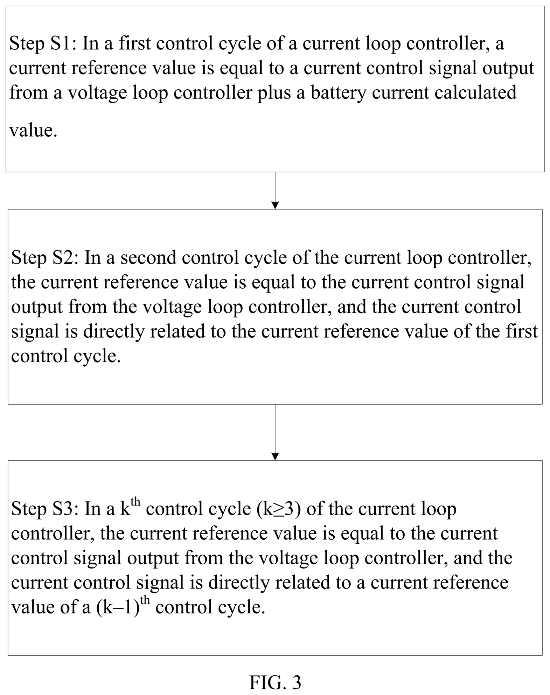

Specifically, referring to the battery mode control flowchart shown in FIG. 3 according to an embodiment of the present invention, the battery mode control method includes the following steps:

Step S1: In the first control cycle of the current loop control, a current reference value $i_{ref}$ input into the current loop controller is obtained based on a current control signal $I_{C1}$ from a voltage loop controller (that is, from the PI regulator) (where the number 1 represents the first control cycle) and the battery current calculated value $I_B'$. Specifically, the current reference value $i_{ref}$ input into the current loop controller is equal to the current control signal $I_{C1}$ output from the PI regulator plus the battery current calculated value $I_B'$, that is:

$$i_{ref} = I_{C1} + I_B'.$$

Preferably, for device protection, amplitude limiting processing is performed on the current reference value $i_{ref}$. If $i_{ref} > I_{max}$, $i_{ref} = I_{max}$, where $I_{max}$ is an output upper limit of the voltage loop controller; and if $i_{ref} < I_{min}$, $i_{ref} = I_{min}$, where $I_{min}$ is an output lower limit of the voltage loop controller. After the amplitude limiting stage, a final current instruction of the first control cycle is recorded as $I_{ref1}$, which is a current reference value $y_1$ input into the current loop controller in the first control cycle.

$$[0047] \quad y_1 = y_0 + K_p(e_1 - e_0) + K_i T_s e_1,$$

where both $y_0$ and $e_0$ are equal to zero.

That is,

$$y_1 = K_p e_1 + K_i T_s e_1$$

Step S2: In the second control cycle of the current loop controller, the current reference value $i_{ref}$ input into the current loop controller is obtained based only on a current control signal $I_{C2}$ output from the PI regulator (where the number 2 indicates the second control cycle). In this case, the inverter output power P is forcibly written to 0, that is, there is no inverter output power feedback, and the battery current calculated value $I_B'$ is 0. Therefore, the current reference value $i_{ref}$ input into the current loop controller is equal to the current control signal $I_{C2}$ output from the PI regulator, i.e., $i_{ref} = I_{C2}$.

Similarly, preferably, amplitude limiting processing is performed on the current reference value $i_{ref}$, that is, amplitude limiting processing is performed on the current control signal $I_{C2}$ output from the PI regulator, and a further output after the processing is $y_2$, which is a current reference value input into the current loop controller in the second control cycle.

$$y_2 = y_1 + K_p(e_2 - e_1) + K_i T_s e_2,$$

where $y_1$ is equal to $I_{ref1}$.

Step S3: In the third control cycle and the subsequent control cycles of the current loop controller, which are collectively referred to as a $k^{th}$ control cycle, where k≥3, the current reference value $i_{ref}$ input into the current loop controller is obtained based only on a current control signal $I_{Ck}$ output from the PI regulator. The current reference value $i_{ref}$ is equal to a further output $y_k$ that is obtained after amplitude limiting process is performed on the current control signal $I_{Ck}$ output from the PI regulator. Specifically, the following formula is followed:

$$[0052] \quad y_k = y_{k-1} + K_p(e_k - e_{k-1}) + K_i T_s e_k, \ (\text{k≥3})$$

In the formula, $y_k$ represents the current reference value of the current loop controller in the ongoing control cycle, which is equal to an output of the PI regulator after being processed by the amplitude limiting stage in the ongoing control cycle, $y_{k-1}$ is equal to an output of the PI regulator after being processed by the amplitude limiting stage in the previous control cycle, $K_p$ represents a proportional coefficient of the PI regulator, $K_i$ represents a integral coefficient of the PI regulator, $T_s$ represents a period of time of a control cycle, $e_k$ represents an input of the PI regulator in the ongoing control cycle, and $e_{n-1}$ represents an input of the PI regulator in the previous control cycle. In the third control cycle and the subsequent control cycles of the current loop controller, no feedback stage is involved, and $I_B'$=0.

According to the control method for the uninterruptible power supply in the embodiments of the present invention, an inverter output power feedback current is added, so that when it is switched from the mains mode to the battery mode, a steady value of a current can be quickly tracked, and a bus voltage rises rapidly, thereby reducing distortion of an inverter voltage waveform. In addition, the inverter output power feedback current is used only in the first control cycle, and stability of a controller is not affected.

According to another embodiment of the present invention, an uninterruptible power supply device has two controllers. The two controllers separately control, on one hand, a voltage of a positive direct current bus capacitor C1 and an input inductor current of the UPS, and on the other hand, a voltage of a negative direct current bus capacitor C2 and the input inductor current of the UPS. A positive half-cycle controller and a negative half-cycle controller separately operate according to the control logic described above, and details are not described herein again.

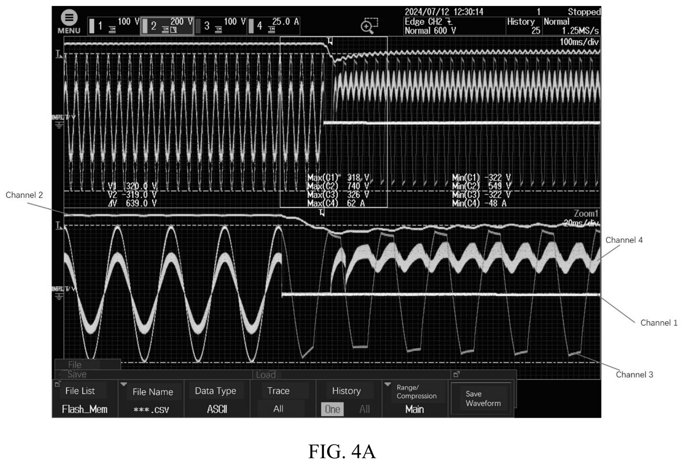

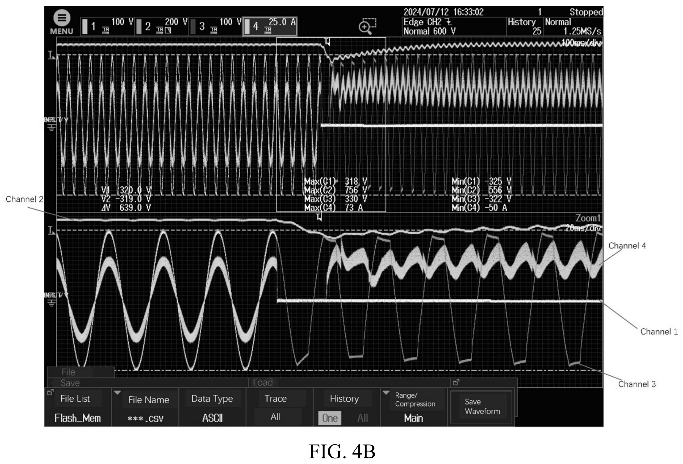

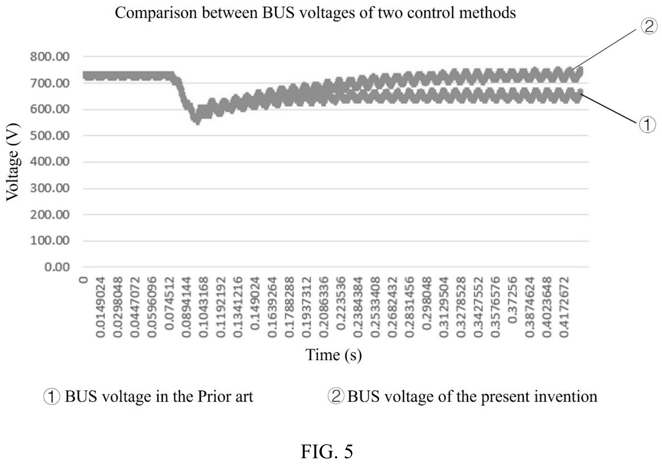

To reflect effects of the embodiments of the present invention, the inventors control the UPS to switch from the mains mode to the battery mode by separately using a control method in the prior art and the control method in the present invention. Referring to FIG. 4A and FIG. 4B that respectively show an oscilloscope sampled diagram of using the control method in the prior art and an oscilloscope sampled diagram of using the control method of the present invention, a channel 1 (yellow) represents an input voltage, a channel 2 (green) represents a direct current bus voltage (BUS voltage, a sum of a voltage of C1 and a voltage of C2), a channel 3 (purple) represents an output voltage, and a channel 4 (blue) represents an inductor current of a battery conversion module. It can be learned from the figures that by using the control method of the present invention, the inductor current reaches a steady state faster, and the direct current bus voltage drops less. In particular, referring to FIG. 5 that particularly shows a comparison between BUS voltages when the control method in the prior art is used and when the control method of the present invention is used, it is more clearly seen from FIG. 5 that the BUS voltage in the control method of the present invention drops less and recovers more quickly.

In the UPS embodiment shown in FIG. 1, the rectifier module 1031 of the power conversion branch 103 and the battery conversion module 1042 of the battery branch 104 are two independent modules. According to another embodiment of the present invention, the rectifier module 1031 and the battery conversion module 1042 are multiplexed into a single module, and the mains mode controller 108 and the battery mode controller 109 respectively provide different control logics to the multiplexed module, implementing different switching logic for transistors in the multiplexed module, thereby achieving AC-DC conversion or DC-DC conversion. A specific circuit topology of the UPS does not affect a core of the control method of the present invention.

In another embodiment of the present invention, a computer-readable storage medium is further provided. Computer programs or executable instructions are stored on the computer-readable storage medium. When the computer programs or the executable instructions are executed, the technical solution as described in the foregoing embodiments is implemented. Implementation principles are similar, and details are not described herein again. In this embodiment of the present invention, the computer-readable storage medium may be any tangible medium that can store data and may be read by a computing apparatus. Examples of the computer-readable storage medium include a hard disk drive, a network attached storage (NAS), a read-only memory, a random access memory, a CD-ROM, a CD-R, a CD-RW, a magnetic tape, and another optical or non-optical data storage apparatus. The computer-readable storage medium may also include a computer-readable medium distributed on a network-coupled computer system, so that computer programs or instructions may be stored and executed in a distributed manner.

In still another embodiment of the present invention, an electronic device is further provided, including a processor and a memory, where the memory is configured to store executable instructions that can be executed by the processor, the processor is configured to execute the executable instructions stored on the memory, and when the executable instructions are executed, the technical solution described in any one of the foregoing embodiments is implemented. Implementation principles are similar, and details are not described herein again.

The reference to "various embodiments", "some embodiments", "one embodiment", "an embodiment", or the like in the specification means that specific features, structures, or properties described with reference to the embodiments are included in at least one embodiment. Therefore, the phrase "in various embodiments", "in some embodiments", "in one embodiment", "in an embodiment", or the like does not necessarily refer to the same embodiment throughout the specification. In addition, the specific features, structures, or properties may be combined in any suitable manner in one or more embodiments. Therefore, the specific features, structures, or properties shown or described with reference to one embodiment may be combined, in whole or in part without limitation, with the features, structures, or properties of one or more other embodiments, provided that the combination is not non-logical or inoperable.

The terms "include" and "have" as well as term expressions with a similar meaning in the specification are intended to cover a non-exclusive inclusion, for example, a process, a method, a system, a product, or a device that includes a series of steps or units is not limited to the listed steps or units, but optionally further includes an unlisted step or unit, or optionally further includes another step or unit inherent to the process, the method, the product, or the device. "An", "a" or "one" does not exclude multiple cases. In addition, the elements in the accompanying drawings of the present application are merely used for schematic description, and are not drawn in a scale.

Although the present invention has been described by using preferred embodiments, the present invention is not limited to the embodiments described herein, and includes various changes and variations without departing from the scope of the present invention.

## Claims

1. A control method for an uninterruptible power supply, used to control switching of the uninterruptible power supply from a mains mode to a battery mode, wherein the control method comprises voltage loop control and current loop control, wherein the voltage loop control provides a current control signal based on a comparison between a bus voltage sampling value and a bus voltage reference value of the uninterruptible power supply, the current loop control provides, based on a comparison between a battery current sampling value and a current reference value, a PWM control signal for operation in the battery mode, and the control method comprises the following steps:

   determining, in a first control cycle of the current loop control, the current reference value based on the current control signal and a battery current calculated value, wherein the battery current calculated value is in direct proportion to an inverter output power of the uninterruptible power supply; and
   determining, in subsequent control cycles of the current loop control, the current reference value based only on the current control signal, wherein a current control signal of each control cycle of the subsequent control cycles is directly related to a current reference value of a previous control cycle.

2. The control method according to claim 1, wherein the battery current calculated value is equal to the inverter output power divided by a battery voltage.

3. The control method according to claim 1, wherein in the first control cycle, the current reference value is equal to a sum of the current control signal and the battery current calculated value.

4. The control method according to claim 1, wherein in the subsequent control cycles, the current reference value is equal to the current control signal.

5. The control method according to claim 1, further comprising an amplitude limiting processing step, wherein

   in the first control cycle, amplitude limiting processing is performed after summing the current control signal and the battery current calculated value, and then the current reference value is determined based on an amplitude limiting processed signal; and
   in the subsequent control cycles, amplitude limiting processing is performed on the current control signal, and then the current reference value is determined based on an amplitude limiting processed signal.

**6.** The control method according to claim 5, wherein the voltage loop control comprises proportional-integral adjustment, and an output of the voltage loop control is an output of the proportional-integral adjustment.

**7.** The control method according to claim 6, wherein the following formula is followed:

$$y_k = y_{k-1} + K_p(e_k - e_{k-1}) + K_i T_s e_k,$$

wherein $k$ is a sequence number of a control cycle, and $k \geq 1$; $y_k$ represents a current reference value of current loop control of a $k^{th}$ control cycle, $y_{k-1}$ represents a current reference value of current loop control of a $(k-1)^{th}$ control cycle, $K_p$ represents a proportional coefficient of the proportional-integral adjustment, $K_i$ represents an integral coefficient of the proportional-integral adjustment, $T_s$ represents a time of a control cycle, $e_k$ represents an input of the proportional-integral adjustment of the $k^{th}$ control cycle, and $e_{n-1}$ represents an input of the proportional-integral adjustment of the $(k-1)^{th}$ control cycle.

**8.** The control method according to claim 7, wherein in the first control cycle, $y_1$ is equal to a value obtained after a sum of the current control signal and the battery current calculated value is amplitude limiting processed.

**9.** The control method according to claim 8, wherein in a second control cycle, $y_2$ is equal to a value obtained after the current control signal is amplitude limiting processed.

**10.** A controller for an uninterruptible power supply, configured to control switching of the uninterruptible power supply from a mains mode to a battery mode, wherein the controller comprises a voltage loop controller and a current loop controller, wherein the controller is configured to perform the control method according to any one of claims 1 to 9.

100

FIG. 1

FIG. 2

Step S1: In a first control cycle of a current loop controller, a current reference value is equal to a current control signal output from a voltage loop controller plus a battery current calculated value.

Step S2: In a second control cycle of the current loop controller, the current reference value is equal to the current control signal output from the voltage loop controller, and the current control signal is directly related to the current reference value of the first control cycle.

Step S3: In a $k^{th}$ control cycle ($k \geq 3$) of the current loop controller, the current reference value is equal to the current control signal output from the voltage loop controller, and the current control signal is directly related to a current reference value of a $(k–1)^{th}$ control cycle.

FIG. 3

FIG. 4A

FIG. 4B

Comparison between BUS voltages of two control methods

① BUS voltage in the Prior art          ② BUS voltage of the present invention

FIG. 5

## EUROPEAN SEARCH REPORT

**Application Number**

EP 25 20 8225

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/207433 A1 (LIU YUNG-HSIANG [TW] ET AL) 23 July 2015 (2015-07-23) <br> * abstract * <br> * paragraphs [0033], [0034], [0040] - [0079]; figures 2A-2C, 3, 5,6,10 * <br> ----- | 1-10 | INV. <br> H02J9/06 |
| A | US 2013/026834 A1 (MATSUOKA KAZUMASA [JP] ET AL) 31 January 2013 (2013-01-31) <br> * abstract * <br> * paragraphs [0018] - [0044]; figures 1,4 * <br> ----- | 1-10 | |
| A | CN 109 391 011 A (SHENZHEN SORO ELECTRONICS CO LTD) <br> 26 February 2019 (2019-02-26) <br> * paragraphs [0075], [0076]; figures 1,4-6 * <br> ----- | 1-10 | |

| | TECHNICAL FIELDS SEARCHED (IPC) |
|---|---|
| | H02J |

The present search report has been drawn up for all claims

| Place of search | Date of completion of the search | Examiner |
|---|---|---|
| Munich | 10 March 2026 | Jäschke, Holger |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 730 607 A1**

## ANNEX TO THE EUROPEAN SEARCH REPORT
## ON EUROPEAN PATENT APPLICATION NO.

EP 25 20 8225

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2026

| Patent document cited in search report | Publication date | Patent family member(s) | Publication date |
|---|---|---|---|
| US 2015207433 A1 | 23-07-2015 | TW 201531010 A<br>US 2015207433 A1 | 01-08-2015<br>23-07-2015 |
| US 2013026834 A1 | 31-01-2013 | CN 102804581 A<br>JP WO2011128962 A1<br>US 2013026834 A1<br>WO 2011128962 A1 | 28-11-2012<br>11-07-2013<br>31-01-2013<br>20-10-2011 |
| CN 109391011 A | 26-02-2019 | NONE | |

EPO FORM P0459

For more details about this annex : see Official Journal of the European Patent Office, No. 12/82

17